# EUROPEAN PATENT APPLICATION

(11) **EP 4 819 296 A1**
(43) Date of publication of application: **07.10.2026**
(21) Application number: 25167988.2
(22) Date of filing: 02.04.2025
(51) Int. Cl.: H01M 10/613, H01M 50/256, H01M 50/276, H01M 50/278, H01M 50/287, H01M 50/30, H01M 50/583, H01M 10/6569, H01M 50/169, H01M 50/171, H01M 50/291, H01M 50/213

(54) **LID FOR BATTERY APPLICATIONS WITH EMBEDDED COOLING MANAGEMENT AND POWER FLOW CONTROL**

(71) Applicant: ABERTAX RESEARCH AND DEVELOPMENT LTD., PLA 3000 Paola (MT)
(72) Inventor: Cilia, Joseph, ZBG 2809 Zebbug (MT); Brincat, Andrea, MST 3215 Mosta (MT); Azzopardi, Neville, KKP 1740 Kirkop (MT); Cilia, Sarah, ZGB 2809 Zebbug (MT); Mercieca, Sammy, MST 4014 Mosta (MT); Ellul, Noel, MST 1019 Mosta (MT); Schembri, George, BKR 1262 Birkirkara (MT)
(74) Representative: Diehl & Partner

(57) **Abstract**

A battery lid (1) for closing a battery box (3) is disclosed. The battery lid (1) comprises a plastic perimeter frame (2) and a heat-conductive part (4). The plastic perimeter frame (2) is made of plastic material and defines an outer rim (2a) surrounding an aperture (2b). The heat-conductive part (4) has a surface that is that is larger than the surface of the aperture (2b) defined by the inner wall (2d) of the outer rim (2a) of the plastic perimeter frame (2). The heat-conductive part (4) is secured to the outer rim (2a) of the plastic perimeter frame (2) using detachable attachment means. The battery lid (1) may further comprise embedded battery electronics (14, 17) that is located within the aperture (2b) of the plastic perimeter frame (2) such that the embedded battery electronics (14, 17) are located below the heat-conductive part (4) in a battery box (3). The embedded battery electronics (14, 17) may be a battery management board (17) and/or a power flow control board (14). The power flow control board (14) may have both primary and secondary protection capabilities, the primary protection capabilities causing a logical shutdown if a hazard is detected and the secondary protection capability causing a physical shutdown if a further hazard is detected. The battery management board contains a combination of hardware and software algorithms to be able to detect a critical failure of the primary protection in order to trigger the secondary protection for physical shutdown.

## Description

There are various battery formats available on the market, designed for a wide range of applications. Most commercially available batteries are sealed, meaning their lids are permanently fixed or attached to the battery enclosure. As a result, when a battery reaches the end of its lifespan or sustains internal damage, it must be discarded or sent for recycling.

The lid, in particular, is also a complex part of the complete battery requiring expensive moulds usually with embedded insert moulding of the terminals. This limits the flexibility especially when the lid needs to be resized to suit different battery box sizes.

This invention introduces a battery lid that can be easily adapted to different sizes and easily removed, allowing for maintenance, repairs, updates or modifications, particularly on the internal electronics. The expensive components of the lid can also be reused; for example, at the end of cycle life of the (battery) cells the box and cells are replaced and the lid including the terminals and electronic boards can be reused. The reusable part of the lid and electronics, with an estimated cost of 20% to 30% of the overall battery cost, is expected to be able to cope with at least two life cycles of typical cells available on the market. Hence the second battery will have a much lower cost making the novel lid even more cost effective and attractive to the end user while simplifying recycling and reducing the carbon footprint of the end product.

In the case of new battery technologies such as Lithium ion or Sodium ion, the battery consists of multiple cells housed within the enclosure and wired together to achieve the desired voltage. Regardless of whether the cells are cylindrical or prismatic, they remain completely sealed (i.e. each individual battery cell is completely sealed when it is placed in the box of the battery and even remains completely sealed during use inside the battery), eliminating the risk of exposure to hazardous chemicals when opening the lid. These cell technologies offer the possibility to gain internal access to the battery, unlike the popular, traditional lead-acid batteries, which contain corrosive acids and toxic materials such as lead, that pose health hazards to anyone trying to gain access to the internal part of the battery. Furthermore, lead-acid batteries emit hydrogen gas and in fact most battery lids are equipped with a gassing channel to divert this gas to a safe location. Other than the new battery technologies the standard lead-acid battery lids also take up additional space above each cell due to the plug or valve required for venting each cell. In this invention, whilst keeping the same overall volume of standard battery sizes, this space is reutilized outside the battery lid, thanks to flat design, and utilized for cooling purposes allowing batteries to be stacked on top of each other if necessary.

Most of the available batteries using the newer battery technologies such as Lithium ion and Sodium ion, are presently re-using existing battery boxes and lids that have been developed for lead-acid technology. This results in a number of limitations especially due to the fact that the embedded battery management and control electronics cannot be accessed, and furthermore because they will tend to result in premature failure due to the heat dissipation within the battery itself. This heat is usually accumulated inside the box as it is very difficult to dissipate since the battery box is typically entirely made of plastic sealing the inside of the box from the outside of the box.

The battery lid in this invention can make use of standard-size battery boxes; typical examples of such sizes are L2, L3, L4 or L5 which are readily available on the market and used in multiple applications. Reusing these sizes eliminates the need for investment in new complex and expensive moulds. This invention on the other hand proposes a new lid design that with minor investment can be modified to suit any existing and available boxes such as the L2 - L5 range. The advantages and flexibility of the method of assembly proposed allows the battery to be also possibly assembled in an infinite variety of other sizes, provided the internal measurements of the box accommodate the standard sizes of readily available cells, in particular Sodium-ion (Na-ion) cells or Lithium iron phosphate cells (LFP). This means that the final battery size would not be restricted to any fixed dimensions, except for the obvious limitation of the cell sizes. The system could also cater for the use of prismatic cells instead of cylindrical ones.

Another novelty of this invention, described in the next section, addresses the battery electronics, that feature novel ideas for battery power flow control with both primary and secondary safety control devices and in particular a detection method for the failure of primary protection.

### Battery lid:

Conventional battery boxes are typically constructed from either polypropylene (PP), a semi-crystalline plastic, or acrylonitrile butadiene styrene (ABS), an amorphous plastic. Each material has its own advantages and disadvantages in battery applications. The design described here is compatible with both materials, regardless of which one is used for the battery enclosure.

In standard battery designs, plastic lids are commonly permanently attached to the battery boxes using well-known techniques such as gluing or heat welding. This invention also allows the use of these standard manufacturing practices allowing its use with minimal changes in the manufacturing process.

Starting from the prior art it is the object of the present invention to provide a battery lid for a battery box that is reusable and facilitates maintenance of the battery.

The above object is solved by the combination of features of independent claim 1. Preferred embodiments are defined in dependent claims.

According to an embodiment a battery lid for closing a battery box comprises a plastic perimeter frame and a heat-conductive part. The plastic perimeter frame is made of plastic material and defines an outer rim surrounding an aperture. The heat-conductive part has a surface that is larger than the surface of the aperture defined by the inner wall of the outer rim of the plastic perimeter frame. The heat-conductive part is secured to the outer rim of the plastic perimeter frame using detachable attachment means. It is not necessary that the aperture is completely free of obstacles. For instance, reinforcement ribs may be provided in the aperture. The reinforcement ribs may form a grid.

By the provision of the heat-conductive part the battery lid is designed to allow efficient thermal dissipation of heat generated in the battery. Moreover, by the provision of the aperture in the plastic perimeter frame together with the detachable securing of the heat-conductive part to the plastic perimeter frame, repairs of the inside of a battery box to which the battery lid is attached are easy without the necessity to detach the plastic perimeter frame from the battery box. This includes any necessary inspection and/or repairs to the battery electronics that are inside the battery box, under the lid. This allows re-use of components of the battery. Finally, a production process is more flexible by the provision of the plastic perimeter frame and the heat-conductive part as separate parts that consist of different materials and have different thermal conductivity. Moreover, an insulator can be used for the plastic perimeter frame and a conductor can be used for the heat-conductive part.

According to an embodiment, the heat-conductive part has a thermal conductivity of at least 1 W/(m·K). According to an alternative, the heat-conductive part has a thermal conductivity of at least 10 W/(m·K).

According to an embodiment, the detachable attachment means are screws or a snap fit or a quick-release fastener. Any fastening mechanism that allows flexibility and ease of removal/reattachment is suited.

According to an embodiment, the heat-conductive part consists of a metal. According to an embodiment, the metal is aluminium, steel, or any other metal, having the desired thermal conductivity.

According to an embodiment that is particularly suited for batteries having a low power and hence low generated heat, the heat-conductive part consists of a material having a low thermal conductivity (e.g. lower than 1 W/(m·K)), such as plastic.

According to an embodiment, the outer rim of the plastic perimeter frame defines a flat plane and the heat-conductive part is a flat sheet. In consequence, the outer rim and the heat-conductive part can come into planar contact with each other.

According to an embodiment, the battery lid further comprises embedded battery electronics that are located within the aperture of the plastic perimeter frame such that the embedded battery electronics are located below the heat-conductive part in a batter box. In consequence, the embedded battery electronics can be accessed by removing the heat-conductive part for maintenance and repair. Moreover, the embedded battery electronics can be used to monitor battery current and/or voltage to prevent overcharging, over-discharging, and other unsafe conditions of the battery. In case the embedded battery electronics come into contact with the heat-conductive part, heat generated by the embedded battery electronics is dissipated to outside the battery by the heat-conductive part.

According to an embodiment, the embedded battery electronics are a battery management board and/or a power flow control board. According to an embodiment, the power flow control board has both primary and secondary protection capabilities, the primary protection capabilities causing a logical shutdown if a hazard is detected and the secondary protection capability causing a physical shutdown of the battery if a hazard is detected.

According to an embodiment the embedded battery electronics consist of modular plug-in components consisting of a battery management board and a power flow control board, the power flow control board being positioned near or directly coupled to a battery terminal that is attached to the heat-conductive part. Placing the power flow control board near or directly coupled to a battery terminal enhances heat dissipation through the thermal heat capacity and dissipation that can be provided from power cables that are attached to the battery terminal in use of the battery. Providing the power flow control board separately from the battery management board offers the advantage that only the battery management module needs to be included in each battery when a number of batteries are connected in series, wherein one single power flow control board is used by several batteries, eliminating costs and unnecessary heat dissipation from more than one power flow control board.

According to an embodiment the power flow control board includes one or more of the following components: electronic switches, contactors, relays, a fuse, a Self-Control-Protector-(SPC)-fuse, shunt current-sensing resistor. A Self-Control-Protector-(SPC)-fuse with integrated heating elements is often used in combination with a secondary protection capability integrated with the power flow control electronics causing a physical shutdown if a hazard is detected. As the heat-conductive part is removable, such a Self-Control-Protector-(SPC)-fuse is accessible and replaceable with ease.

According to an embodiment the battery management board allows detection of failure of a primary protection, which detection is then used to trigger a secondary protection.

According to an embodiment the battery management board provides communication contact to allow both parallel and series connection of a number of batteries.

According to an embodiment the battery management board is designed for modular assembly using a Plug-and-Play system, simplifying production.

According to an embodiment, the battery lid further comprises a thermal management system using phase change material. An exemplary thermal management system using phase change material is described in the international patent application WO 2021 / 130 518 A1. The content of this document is incorporated by reference. The thermal management system using phase change material provides thermal transfer between the heat-conductive part and a heat source (such as embedded battery electronics and/or battery cells) inside the battery box to enhance heat dissipation from the embedded battery electronics and the battery cells to the heat-conductive part, thereby improving overall thermal performance. For example, the thermal management system using phase change material may consist of a liquid to vapour phase-change system that is present in the battery box and that can transfer heat from the heat source (e.g. the battery cells and/or embedded electronics) to the heat-conductive part.

According to an embodiment, the battery lid further comprises at least one raised handle attached to the plastic perimeter frame such that the heat-conductive part is located between the at least one raised handle and the outer rim of the plastic perimeter frame. Such a handle provides an air gap between batteries, when stacked, facilitating heat flow through both passive and active cooling. According to an embodiment, the attachment of the at least one handle is performed using the same detachable attachment means as for the heat-conductive part. This facilitates mounting work as the handle has to be removed anyway in order to remove the heat-conductive part. According to an embodiment, the at least one raised handle comprises a communication connector providing mechanical protection and direct access to a communication interface of the battery management board.

According to an embodiment, the battery lid further comprises at least one additional clip-on detachable handle that is adapted to be clipped to the battery lid. According to an embodiment, the additional clip-on detachable handle is adapted to be clipped to the at least one raised handle. This detachable handle, that is provided in addition to a handle that is fixed to the battery lid enables easier battery installation and access, particularly in confined or hard-to-reach compartments.

According to an embodiment, the battery lid further comprises battery terminals that are fixed to holes provided in the heat-conductive part or in the plastic perimeter frame. According to an embodiment, the fixing is performed via electrically insulating posts. Usage of electrically insulating posts is required if the heat-conductive part consist of a material having electrical conductivity.

According to an embodiment, the plastic perimeter frame is equipped with a breathing vent to equalize the internal pressure with the surrounding ambient atmospheric pressure. According to an embodiment the breathing vent is provided in a corner of the plastic perimeter frame outside the outer rim. The breathing vent could also be mounted in another place that is free from any obstruction. The breathing vent can also be complemented or replaced by a pressure release valve.

According to an embodiment, raised corner supports are provided and attached to the plastic perimeter frame. These corner supports allow to stack batteries while maintaining a predefined air gap between stacked batteries to improve heat dissipation instead of or in addition to the provision of raised handles fixed to the battery lid. According to an embodiment, the corner supports use the same attachment means as the heat-conductive part.

According to an embodiment, a gasket is provided between the outer rim and the heat-conductive part. Such a gasket can prevent humidity from entering the battery box.

According to an embodiment, the plastic perimeter frame further comprises a sidewall, wherein a main surface of the sidewall is oriented orthogonal to a main surface of the outer rim. Such a sidewall facilitates attachment of the battery lid to a battery box as the sidewall can either surround a battery box or be inserted into a battery box.

An embodiment of a battery system comprises the battery lid as described above and a battery box. The plastic perimeter frame is fixed to the battery box through a standard attachment method. According to an embodiment, the plastic perimeter frame is (optionally permanently) fixed to the battery box by welding or gluing or clipping. After the battery has reached its lifetime, components can be removed from the battery box for re-use or even replaced by removing the heat-conductive part. In case the plastic perimeter frame is made from the same material as the battery box they can be recycled together.

According to an embodiment, the battery system further comprises battery cells that are housed within the battery box using custom-designed plastic spacing-grids that maintain an air gap between the battery cells for heat dissipation while preventing cell displacement due to movement or vibration. According to an embodiment, the battery cells are prismatic or cylindrical.

The above described battery system and battery lid has a design that is easily adaptable for use with both standard and custom battery enclosures by just changing the plastic perimeter frame and the size of the heat-conductive part. The size of the plastic perimeter frame is easily manufactured in different sizes simply by having the plastic injection mould which produces the frames, with changeable inserts to cater for different moulded frame sizes.

Embodiments of the present invention will be described by reference to the drawings. In the drawings, identical or corresponding elements are denoted by identical or corresponding reference signs.
- Figure 1: is a perspective view on a battery lid according to an embodiment, wherein the heat-conductive part is removed.
- Figure 2: is a side view of a clip-on detachable handle that can be used with the battery lid according to the embodiment.
- Figure 3: is a side view of a clip-on detachable handle when engaged with a raised handle of the battery lid according to the embodiment.
- Figure 4: is a side view of a battery system using the battery lid according to the embodiment, wherein some parts are shown transparent.
- Figure 5: is a top view of part of a plastic perimeter frame and a heat-conductive part of a battery lid according to the embodiment.
- Figure 6: is a cross-sectional view of a corner of a battery system according to the embodiment;
- Figure 7: is a perspective view on a plastic corner support of a battery lid according to the embodiment; and
- Figure 8: is a side view of two stacked battery systems according to the embodiment.

This invention introduces a novel flat lid design that makes use of a combination of both heat-conductive materials, such as metals, and plastic components. The benefits of this hybrid approach will be explored in detail later in this description.

The main idea behind this design is to take full advantage of the battery lid surface for cooling purposes by using a heat-conductive material instead of traditional plastic for most of the battery lid surface. This heat-conductive material enables efficient heat transfer of heat generated from both the battery cells and electronic boards of embedded battery electronics to the ambient. The heat-conductive material, which can be cut out from a sheet to form a heat-conductive part 4, is attached to a plastic perimeter frame 2 which can be injected using the same type of plastic material as a battery box 3, making it easy to use the standard manufacturing process for welding/gluing of the battery lid 1. This combination enhances both thermal management and structural integrity, offering a significant improvement and innovation over conventional sealed battery designs.

The assembly of the battery lid 1 centres around a plastic perimeter frame 2 which is separately moulded according to the size and shape of the enclosure battery box 3. This plastic perimeter frame 2 is heat-welded or glued on to the battery box 3 and provides a permanent fixture to the same battery box 3. The design of this plastic perimeter frame 2 is kept very simple, so a straight-forward injection mould would be applicable, with no complicated movements and no undercuts that would require special sliding cores in its manufacture. The plastic perimeter frame 2 defines an outer rim 2a surrounding an aperture 2b. The aperture 2b is actually defined by the inner wall 2d of the outer rim 2a. The outer rim 2a constitutes a placement area for the heat-conductive part 4. Reinforcement ribs 2e are provided in the aperture, forming a grid. The plastic perimeter frame 2 also provides areas between the reinforcement ribs 2e within which the electronic board/s 14, 17 can be seated for ease of manufacturing and accessibility. Thus, the reinforcement ribs 2e are used for mounting the electronic board/s 14, 17. The design of this plastic perimeter frame 2 also lends itself to be moulded out of re-cycled plastic, PP, ABS or other materials. The plastic injection mould would feature replaceable inserts or parts that would enable the frame moulding to be produced in different sizes or lengths to accommodate different battery boxes 3, whether these are custom made or enclosures that are already available on the market.

Contrary to prior art batteries on the market, the heat-conductive part 4 of the battery lid 1 in this novelty is made to be removable to gain access to the inside of the battery box 3, and then re-closed. This provides the advantage that the battery can be opened allowing for inspection, repair, re-use and greatly simplifying re-cycling. The heat-conductive part 4 of the battery lid 1 can be cut out from a sheet in production making resizing very simple and with minimal investment costs. In the case of a punching process, only a new cutting process will be required for each type whereas in case of water jet or laser cutting, the cutting machine will simply need to be reprogrammed with the new sheet template required.

In the present case, the heat-conductive part 4 is made of aluminium and thus a material having electrical conductivity.

Battery terminals 5 are fed through holes in the heat-conductive part 4 of the battery lid 1 and mounted via electrically insulating posts 6 made of electrically insulating material. The battery terminals 5 can be easily mounted onto the heat-conductive part 4 or on the plastic perimeter frame 2 by hand or using an automated process. The battery terminals 5 are machined independently and placed inside a plastic housing (i.e. the electrically insulating post 6) before fitted onto the heat-conductive part 4 of the battery lid 1, again by hand or using an automated process. In the case where the battery terminal 5 is fitted to the heat-conductive part 4 of the battery lid 1, this terminal plastic housing (i.e. the electrically insulating post 6) ensures electrical isolation as well. A heat dissipating electronic power flow control board 14 is secured under the battery lid 1 and can possibly be also bolted to the battery terminal 5 to make use of the thermal capacity and heat-conductivity of both the battery terminal 5 and connecting cables (not shown) that are attached to the battery terminal 5.

In general, standard batteries are permanently sealed, both for safety reasons, as usually batteries contain toxic or harmful components in liquid or gel form (electrolyte), but also because of the way the battery operates, by means of electrodes which go through the electrolytic cycle between the cathode and anode. The assembled battery in this innovation is of the type that contains only sealed cells 16 inside, which can therefore be handled safely with ease even by persons who do not require expertise in the field. This fact allows for the battery to be manufactured with the provision already described, that part of the battery lid 4 could be opened for various reasons, including: replacing or repairing components inside, allowing re-use or for easier dismantling of parts for re-cycling at end-of-life (EOL), as well as accessing the embedded battery electronics 14, 17, if need be, as will be described later.

One other advantage is that the battery power flow control board 14 as well as the battery management board (may also be referred to as cell management board) 17 are mounted directly under the heat-conductive part 4 of the battery lid 1, simplifying repair or replacement of components such as protection fuses. This same lid additionally provides excellent heat dissipation of the heat generated by the electronic boards of embedded battery electronics 14, 17 and the cells 16.

The heat-conductive part 4 of the battery lid 1 is screwed on to the plastic perimeter frame 2 by means of screws 7. A gasket 8 is inserted between the heat-conductive part 4 of the battery lid 4 and an outer rim 2a of the plastic perimeter frame 2, to act as a seal against any water or fine dust ingress from the outside into the battery.

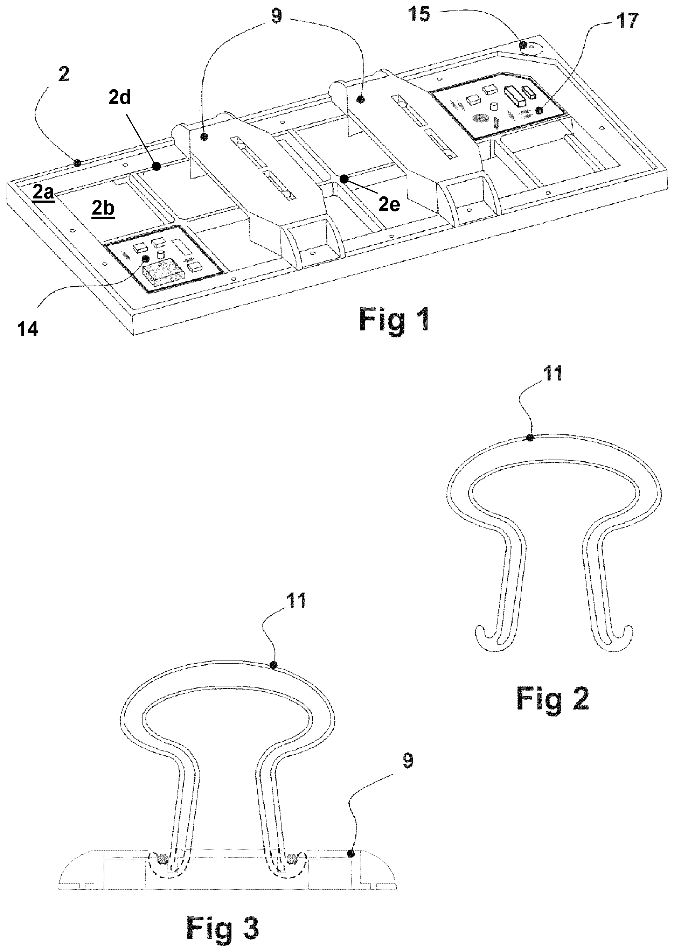

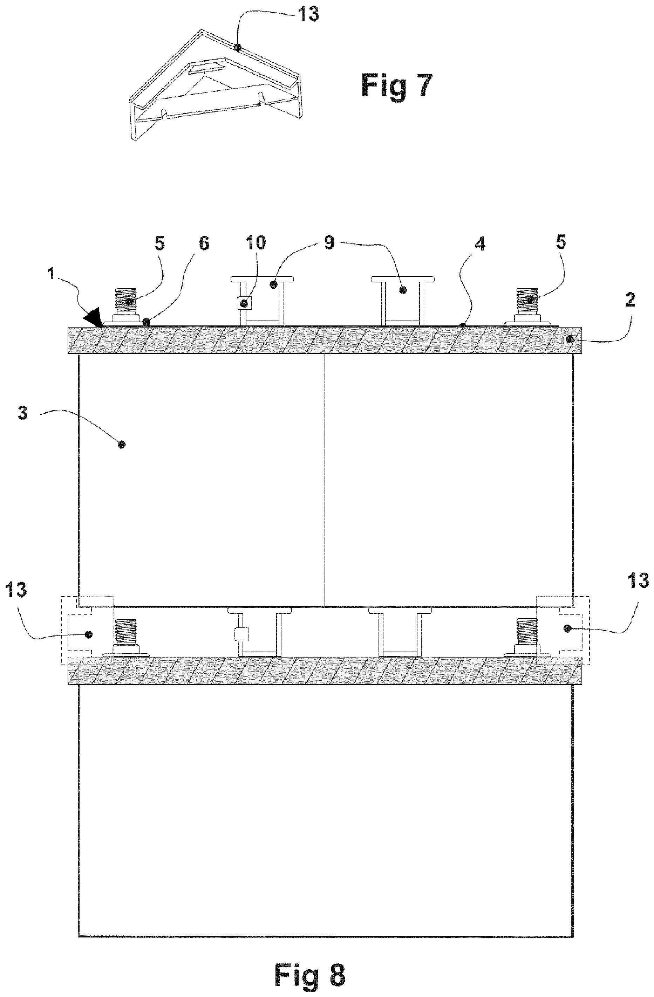

Another innovative feature of this battery is that the plastic perimeter frame 2 is fitted with detachable raised handles 9. These raised handles 9 are fitted on top of the battery lid 1 and attached to the plastic perimeter frame 2 as shown in Fig 1. Depending on the size of the battery, one or two such raised handles 9 can be fitted. The raised handles 9 can be injected from different or same material as the plastic perimeter frame 2 and also lend themselves to the use of recycled material. The lid design also enables easy removal or repositioning of the raised handle(s) 9 to accommodate various applications. The raised handles 9, which are raised higher than the plastic perimeter frame 2 of the battery lid 1 also provide an air gap, which allows for better heat dissipation between neighbouring batteries when these are stacked on top of each other (as shown in Fig. 8). The height of the raised handles 9 above the plastic perimeter frame 2 of the battery lid 1 ensure that the battery terminals 5 are clear when batteries are stacked on top of each other for energy storage applications or during transport. The raised handles 9 also provide space for an optional plug /communication contact 10 to provide a wired connection for communication to a processor on the battery management board 17 - both for single and inter-battery communication. The raised handles 9 provides mechanical protection to the communication plug / communication contact 10 and to the delicate communication wire connected to said plug/contact. Even though two raised handles 9 are shown in the Figures, there may even be one single raised handle or more than two raised handles.

The raised handles 9 that are bolted to the plastic perimeter frame 2 of the battery lid 1 also provide for the addition of a clip-on detachable handle 11 to assist in lowering the battery into tight spaces. A typical example of this requirement is in marine applications or generically in tight spaces which would normally not be suited or easily accessible for battery installations.

The plastic perimeter frame 2 is also equipped with a breathing vent 15 comprising a semi-permeable membrane 12 that can equalize internal battery pressure with surrounding ambient atmospheric pressure. This feature is important, as the internal pressure may rise due to heat generated by the battery cells 16 and embedded electronics 14, 17 during operation. Additionally, if the batteries are exposed to different ambient conditions - such as variations in pressure (altitude) and/or temperature - this breathing vent 15 ensures automatic equalisation, preventing discrepancies between the internal and external environment of the battery. The breathing vent can also be combined with a pressure release valve if the internal pressure of the battery is required to be different than that of ambient. The latter might be the case if a liquid/vapour phase change material is used to cool the cells.

A provision of corner supports 13 made of plastic or any other suitable material, is also provided, whereby the corner supports are screwed in place, on top of the plastic perimeter frame 2 of the battery lid 1, making use of the same screw locations and screws 7 as those provided for screwing the heat-conductive part 4 on to the plastic perimeter frame 2. This is possible by removing the corner screws restraining the heat-conductive part 4 on to the plastic perimeter frame 2 and using these same screw locations and screws 7 to hold the corner supports 13 in place. These corner supports 13 allow batteries to be stacked securely on top of each other and are designed with wedge shaped restraints to impede the batteries from moving laterally relative to each other when stacked. The height of the corner supports 13 is such that they would be the same height as the fitted raised handles 9 and provide a stable resting place for the stacked batteries on top whilst still maintaining an air gap for air-circulation and improved heat dissipation. This feature allows stacking of batteries in applications that need more than one battery, such as in home energy storage applications.

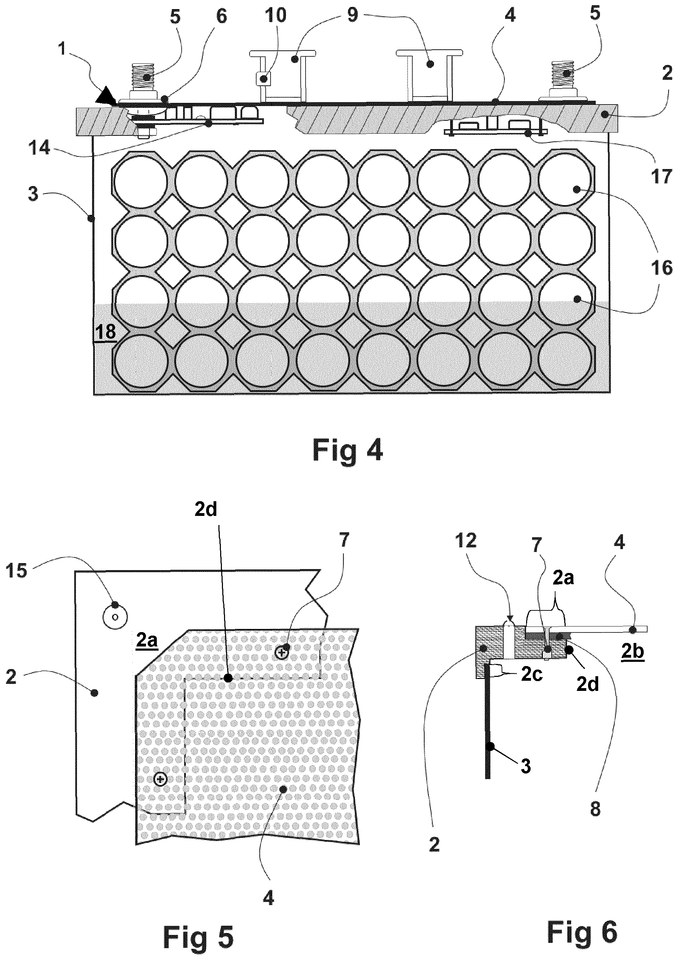

The possibility of improving the cooling efficiency, or enhancing heat dissipation, by a phase change material is also catered for. Phase change cooling can be used efficiently especially using liquids that change to vapour. The heat-conductive material in the lid will enable the vapour to easily condense back to liquid if the ambient temperature is appropriate. This would be ideal in such an enclosure, with embedded electronics and high-power density cells allowing high current charging and discharging. Such a thermal management system using phase change material 18 is used in Figure 4. In Figure 4, the thermal management system using phase change material 18 consist of a liquid to vapour phase-change system that is present in the battery box 3 and that can transfer heat from the heat source such as the sealed battery cells 16 to the heat-conductive part 4.

As mentioned earlier, the electronic boards for the battery management 17 and power flow control 14 are mounted directly under the heat-conductive part 4 of the battery lid 1 for ideal heat dissipation. These electronic boards 14, 17 can be easily accessed when the heat-conductive part 4 of the battery lid is opened/removed. The embedded battery electronics in the present embodiment comprise a battery management board 17 whose function is to take care of cell balancing, cell and battery pack monitoring and direct control of the power flow control board 14 to ensure safe battery operation. The power flow control board 14 also comprises a sensing means (hardware and software) for detecting the failure of the primary switches and a protection device having a heating resistor and a fuse element provided on a circuit board; whereby the sensing means can switch a current flowing into the heating resistor in order to melt the fuse element in such fault conditions on any of the cells/batteries.

The specially designed power flow control board 14 helps to protect the cells from overcurrent, overvoltage, undervoltage, under temperature and over temperature even under conditions where the primary switches fail. In the case where the primary electronic switches of the power flow control board 14 that switch the current to and from the battery fail, a condition occurs where the battery can keep supplying current to the load; or an external power source (power supply or charger) could keep supplying current to the battery. If the battery current remains within the standard secondary fuse limits, it will continue to flow even if the primary electronic switches fail in a way that allows uninterrupted current flow, regardless of control signals to the protection switches. This secondary protection circuit will detect such a condition and will operate the heating resistors on the secondary protection device to open the circuit and stop the flow of current from the battery.

The novelty, that the embedded battery electronics 14, 17 are physically an integral part of the battery lid 1, have the added advantages as follows:
This helps with improved heat dissipation, having the relatively large area of the heat-conductive part 4 of the battery lid 1 acting as an optimal heatsink.

The heat-conductive part 4 of the battery lid 1 is readily removable for easier access to the embedded battery electronics 14, 17 and sealed cells 16 underneath.

Once the heat-conductive part 4 of the battery lid 1 is opened, all the different electronics boards are simply "Plug and Play" so any part can be easily removed for replacement, if need be.

The high current control board / power flow control board 14, including the Self Control Protection fuse is located close to the battery terminals 5 and away from the battery management board 17. This high-power board is the one that requires better heat dissipation.

The heat-conductive material of the heat-conductive part 4 together with the battery terminals 5 and electronic boards 14, 17 can be recovered after the sealed cells 16 reach their end of life and re-used with new sealed cells 16.

The power flow control board 14 can be selected from one of /or a combination of the elements below: Electronic Switches (transistors or MOSFETs), Contactor or relay, Smart fuse and Shunt current sensing resistor.

All electronic modules / boards are connected via plugs (Plug and Play), in order to facilitate the repair and replacement of any of the electronic boards if anything malfunctions.

The system also allows for the power flow control board 14 to be included in only one of the batteries in the case of stationary batteries in series making the overall battery system cheaper and more efficient. Furthermore, the electronic boards 14, 17 are strategically positioned within the battery lid 1 such that production is simplified, and thermal dissipation is optimised.

### List of reference signs:

- 1: battery lid
- 2: plastic perimeter frame (of the lid)
- 2a: outer rim (of the plastic perimeter frame)
- 2b: aperture (of the plastic perimeter frame)
- 2c: sidewall (of the plastic perimeter frame)
- 2d: inner wall (of outer rim)
- 2e: reinforcement rib
- 3: battery box
- 4: heat-conductive part (of the lid)
- 5: battery terminal
- 6: electrically insulating posts
- 7: attachment means / screw
- 8: gasket
- 9: raised handle
- 10: communication contact
- 11: clip-on detachable handle
- 12: semi-permeable membrane (of breathing vent / pressure release valve)
- 13: corner support
- 14: power flow control board
- 15: breathing vent / pressure release valve
- 16: sealed cell
- 17: battery management board
- 18: thermal management system using phase change material

## Claims

1. Battery lid (1) for closing a battery box, comprising:
a plastic perimeter frame (2) made of plastic material, the plastic perimeter frame (2) defining an outer rim (2a) surrounding an aperture (2b); and
a heat-conductive part (4) having a surface that is larger than the surface of the aperture (2b) defined by the inner wall (2d) of the outer rim (2a) of the plastic perimeter frame (2), the heat-conductive part (4) being secured to the outer rim (2a) of the plastic perimeter frame (2) using detachable attachment means (7), wherein the detachable attachment means (7) optionally are screws or a snap fit or a quick-release fastener, wherein the heat-conductive part (4) optionally consists of a metal such as aluminium or steel, or optionally consists of plastic.

2. The battery lid (1) of claim 1, wherein
the outer rim (2a) of the plastic perimeter frame (2) defines a flat plane; and
the heat-conductive part (4) is flat at least in a contact area for contacting the plastic perimeter frame (2), wherein the heat-conductive part (4) optionally is flat outside the contact area or comprises heat dissipation fins outside the contact area.

3. The battery lid (1) of claim 1 or 2, further comprising:
embedded battery electronics (14, 17) that are located within the aperture (2b) of the plastic perimeter frame (2) such that the embedded battery electronics (14, 17) are located below the heat-conductive part (4) in a battery box, the embedded battery electronics (14, 17) optionally being a battery management board (17) and/or a power flow control board (14), the power flow control board (14) optionally having both primary and secondary protection capabilities, the primary protection capabilities causing a logical shutdown if a hazard is detected and the secondary protection capability causing a physical shutdown if a further hazard is detected.

4. The battery lid (1) according to claim 3, wherein the embedded battery electronics (14, 17) consist of modular plug-in components consisting of a battery management board (17) and a power flow control board (14), the power flow control board (14)being positioned near or directly coupled to a battery terminal (5) that is attached to the heat-conductive part (4).

5. The battery lid (1) of claim 3 or 4, wherein the power flow control board (14) includes one or more of the following components: electronic switches, contactors, relays, a fuse, a Self-Control-Protector-fuse, shunt current-sensing resistor.

6. The battery lid (1) according to one of claims 3 to 5,
wherein the battery management board (17) allows detection of failure of a primary protection using a combination of hardware and software, which detection is then used to trigger a secondary protection, and/or
wherein the battery management board (17) provides communication contact (10) to allow both parallel and series connection of a number of batteries; and/or
wherein the battery management board (17) is designed for modular assembly using a Plug-and-Play system.

7. The battery lid (1) of any of the preceding claims, further comprising a thermal management system using phase change material, the thermal management system using phase change material to transport heat between a heat source inside the battery box and the heat-conductive part (4), wherein the thermal management system using phase change material is optionally a liquid to vapour phase-change system that is present in the battery box and that can transfer heat from the heat source to the heat-conductive part, wherein the heat source inside the battery box optionally is embedded battery electronics (14, 17) or battery cells .

8. The battery lid (1) of any of the preceding claims, further comprising:
at least one raised handle (9) is attached to the plastic perimeter frame (2) such that the heat-conductive part (4) is located between the at least one raised handle (9) and the outer rim (2a) of the plastic perimeter frame (2), the attachment optionally being performed using the same detachable attachment means (7) as for the heat-conductive part (4),
wherein the at least one raised handle (9) optionally comprises a communication connector providing mechanical protection and direct access to a communication interface of the battery management board (17) .

9. The battery lid (1) of one of the preceding claims, further comprising at least one additional clip-on detachable handle (11) that is adapted to be clipped to the battery lid (1) and optionally to the at least one raised handle (9).

10. The battery lid (1) of any of the preceding claims, further comprising battery terminals (5) that are fixed to holes provided in the heat-conductive part (4) or in the plastic perimeter frame (2), the fixing optionally being performed via electrically insulating posts (6).

11. The battery lid (1) of any of the preceding claims,
wherein the plastic perimeter frame (2) is equipped with a breathing vent and/or pressure release valve (15), the breathing vent and/or pressure release valve (15) optionally being provided in a corner of the plastic perimeter frame (2) outside the outer rim (2a); and/or
wherein raised corner supports (13) are provided and attached to the plastic perimeter frame (2), the raised corner supports (13) optionally using the same attachment means as the heat-conductive part (4).

12. The battery lid (1) of any of the preceding claims,
wherein a gasket (8) is provided between the outer rim (2a) and the heat-conductive part (4); and/or
wherein the plastic perimeter frame (2) further comprises a sidewall (2c), wherein a main surface of the sidewall (2c) is oriented orthogonal to a main surface of the outer rim (2a).

13. The battery lid (1) of any of the preceding claims, wherein the heat-conductive part (4) has a thermal conductivity of at least 1 W/(m·K) or at least 10 W/(m·K), wherein the heat-conductive part (4) optionally consists of a metal and optionally aluminium or steel.

14. Battery system comprising:
the battery lid (1) of any of claims 1 to 13; and
a battery box (3);
wherein the plastic perimeter frame (2) is fixed to the battery box (3) through a standard attachment method and optionally through a permanent attachment method and optionally by welding or gluing or clipping.

15. The battery system of claim 14, further comprising battery cells being housed within the battery box (3) using custom-designed plastic spacing-grids that maintain an air gap between the cylindrical battery cells, wherein the battery cells are prismatic or cylindrical.
